# EUROPEAN PATENT APPLICATION

(11) **EP 3 599 043 A1**
(43) Date of publication of application: **29.01.2020**
(21) Application number: 18184902.7
(22) Date of filing: 23.07.2018
(51) Int. Cl.: B23B 51/02

(54) **DEEP HOLE DRILL**

(71) Applicant: WALTER AG, 72072 Tübingen (DE)
(72) Inventor: Schnaider, Markus, 77781 Biberach (DE)
(74) Representative: Sandvik

(57) **Abstract**

The present disclosure relates to a deep hole drill (1, 1', 1", 1"', 1"") comprising a shaft (2) having a mounting section, and a cutting section (3, 3', 3", 3"', 3"") consisting of a cutting tip (4) with at least one front cutting edge (6) and a plurality of helically extending chip flutes being separated from each other by helically extending lands, wherein a radial extension of the at least one front cutting edge (6) from a centre axis (7) of the cutting section (3, 3', 3", 3"', 3"") to a transition point (TP) on an outer periphery of the cutting section (3, 3', 3", 3"', 3"") defines a nominal radius (rₙ ) of the deep hole drill (1, 1', 1 ", 1 1 ""), wherein an extension of the cutting section (3, 3', 3", 3"', 3"") in an axial direction is by a factor of twenty or more larger than the nominal radius (rₙ ) of the deep hole drill (1, 1', 1", 1"', 1""),wherein a radius of the cutting section (3, 3', 3", 3"', 3"") defined by a distance of an envelope surface (8) of the cutting section (3, 3', 3", 3"', 3"") from the centre axis (7) of the deep hole drill (1, 1', 1", 1"', 1 "") decreases from the nominal radius (rₙ ) up to a first axial position (L1) distanced in the axial direction from the transition point (TP) towards the shaft (2), whereby forming a first tapering segment (9, 9', 9", 9"') of the cutting section (3, 3', 3", 3"', 3""), and wherein the radius of the cutting section (3, 3', 3", 3"', 3"") again increases at the first axial position (L1) up to a first supporting radius equal to or smaller than the nominal radius (rₙ ), wherein the radius of the cutting section (3, 3', 3", 3"', 3"") decreases from the supporting radius up to a second axial position (L2) distanced in the axial direction from the first axial position (L1) towards the shaft (2), whereby forming a second tapering segment (10, 10', 10", 10"') of the cutting section (3, 3', 3", 3"', 3"").

## Description

### TECHNICAL FIELD

A deep hole drill comprising a shaft having a mounting section, and a cutting section consisting of a cutting tip with at least one front cutting edge and a plurality of helically extending chip flutes being separated from each other by helically extending lands, wherein a radial extension of the at least one front cutting edge from a centre axis of the cutting section to a transition point on an outer periphery of the cutting section defines a nominal radius of the deep hole drill, wherein an extension of the cutting section in an axial direction is by a factor of twenty or more larger than the nominal radius of the deep hole drill, wherein a radius of the cutting section defined by a distance of an envelope sur-face of the cutting section from the centre axis of the deep hole drill decreases from the nominal radius up to a first axial position distanced in the axial direction from the transition point towards the shaft, whereby forming a first tapering segment of the cutting section, and wherein the radius of the cutting section again increases at the first axial position up to a first supporting radius equal to or smaller than the nominal radius.

### BACKGROUND

The term deep holes is typically applied to the machining of holes with a relatively large hole depth to hole diameter ratio or to hole radius ratio. According to the present disclosure, a deep hole drill is a drill, wherein an extension of the cutting section of the drill in the axial direction of the drill is by a factor of ten or more larger than the nominal diameter of the drill.

During the drilling of deep holes effects occur, which are not known from the drilling of short holes. A major concern of deep hole drills is the transport of chips as the chips have to be transported by the chip flutes towards the shaft, only. In order to avoid piling up of chips, many deep hole drills have helically extending chip flutes with a cross-section being as large as possible.

Due to the length of the drills used for deep hole drilling, the drills typically have a considerably high friction between the drill and the walls of the hole.

Furthermore, due to the length of the drill, there is a tendency of deep hole drills to be pushed off centre during the drilling operation. DE 10 2006 062 429 A1 addresses these aspects by providing a deep hole drill comprising a shaft and a cutting section, wherein the cutting section consists of a transportation section and a cutting tip, wherein the transportation section has helically extending chip flutes which are separated by helically extending lands, and wherein at the cutting tip at least one front cutting edge is located defining a nominal radius of the drill, wherein the radius of the transportation section over its major part of its length is smaller than the nominal radius. In order to provide a deep hole drill having a reduced friction in the drilled hole while reducing the tendency for vibrations of the drill, the lands of the transportation section along its peripheral surfaces at at least one axial position comprise supporting rips, wherein the radius of the supporting rips is larger than the radius of the remaining transportation section.

When compared to the prior art, it is an aspect of the present disclosure to provide a deep hole drill having a reduced tendency for vibrations and/or a reduced tendency for vibrational stress on the drill. In addition, it is an aspect of the present disclosure to provide a deep hole drill having a reduced tendency to be pushed off centre during the drilling operation.

### SUMMARY

At least one of the above aspects is addressed by a deep hole drill comprising a shaft having a mounting section, and a cutting section consisting of a cutting tip with at least one front cutting edge and a plurality of helically extending chip flutes being separated from each other by helically extending lands, wherein a radial extension of the at least one front cutting edge from a centre axis of the cutting section to a transition point on an outer periphery of the cutting section defines a nominal radius of the deep hole drill, wherein an extension of the cutting section in an axial direction is by a factor of twenty or more larger than the nominal radius of the deep hole drill, wherein a radius of the cutting section defined by a distance of an envelope surface of the cutting section from the centre axis of the deep hole drill decreases from the nominal radius up to a first axial position distanced in the axial direction from the transition point towards the shaft, whereby forming a first tapering segment of the cutting section, wherein the radius of the cutting section again increases at the first axial position up to a first supporting radius equal to or smaller than the nominal radius, and wherein the radius of the cutting section decreases from the supporting radius up to a second axial position distanced in the axial direction from the first axial position towards the shaft, whereby forming a second tapering segment of the cutting section.

By providing the deep hole drill with a plurality of tapering segments along the cutting section, the friction between the drill and the wall of the hole to be drilled is further reduced while providing an enhanced lateral support of the drill. Thus the tendency of the drill to move with respect to the drilling axis is reduced. Of course, the at least two positions along the axial extension of the drill having the supporting radius also may reduce vibrational effects on the drill and the workpiece.

According to the present disclosure, the shaft is the section of the drill not being involved in chip cutting or transportation. According to the present disclosure, the shaft has a mounting section for mounting the drill in a chuck.

The cutting section has a cutting tip with at least one front cutting edge. In an embodiment, the cutting tip has a conical shape, wherein the front cutting edge follows the outer contour of the cone. The plurality of helically extending chip flutes separated by the also helically extending lands form a transportation segment of the drill as the chip flutes are responsible for promotion of a flow of the chips produced by the cutting edge out of the drill hole.

The nominal radius of the deep hole drill is the nominal radius a hole will have after being drilled with the deep hole drill according to the present disclosure. This nominal radius is defined by the radial extension, i.e. an extension in the radial direction measured perpendicularly to the centre axis of the cutting section. It is evident that the centre axis of the cutting section is identical to the axis of rotation of the deep hole drill during the drilling operation. The nominal diameter of the deep hole drill equals twice its nominal radius.

The axial position of the maximum radial extension of the cutting edge in terms of the present disclosure is denoted the transition point. At the transition point a transition of the front cutting edge into the envelope surface of the drill occurs. The radial extension of the cutting edge defines an envelope surface of the cutting tip at the transition point when the drill is rotated around the centre axis of the cutting section. It is evident that in an embodiment each front cutting edge transitions into a land. In an embodiment, a land abutting a front cutting edge at its foremost point when considered in the axial direction may form a secondary cutting edge forming or shaping the wall of the hole.

The envelope surface of the cutting section in each cross-section along the axial extension of the cutting section is defined by the outer peripheral contour formed by a rotation of the drill around the centre axis of the cutting section. According to the present disclosure, the radius of the cutting section which in turn is defined as the distance of the envelope surface from the centre axis decreases from the nominal radius towards the shaft until the envelope surface reaches a first axial position distanced by a distance in the axial direction from the transition point. This reduction of the radius of the cutting section defines a first tapering segment of the cutting section. Tapering of the envelope surface introduces a small space between the wall of the hole and the material of the land leading to the advantages outlined above. In an embodiment the radius of the envelope surface decreases continuously, preferably linearly towards the shaft.

In an embodiment a tapering of the envelope surface in either of the tapering segments is effected by a tapering of each land in an axial direction towards the shaft.

When reaching the first axial position, the radius of the cutting section again increases up to a first supporting radius which is equal to or smaller than the nominal radius. At the axial position having the supporting radius, the cutting section of the drill may find support at the wall of the drilled hole during the drilling operation.

According to the present disclosure, the radius of the envelope surface of the cutting section decreases from the first supporting radius towards the shaft until the envelope surface reaches a second axial position distanced from the first axial position in the axial direction. This reduction of the radius of the cutting section defines a second tapering segment of the cutting section. In an embodiment the radius of the envelope surface in the second tapering segment, preferably in all tapering segments, decreases continuously, preferably linearly towards the shaft.

In an embodiment of the present disclosure the radius of the envelope surface in the first tapering segment starting from the nominal radius decreases by a rate in a range from 0.00005 mm per mm to 0.005 mm per mm, wherein the rate is defined as the decrease in radius in mm per length of the drill in mm in the axial direction.

In a further embodiment of the present disclosure the radius of the envelope surface in the second tapering segment starting from the first supporting radius decreases by a rate in a range from 0.00005 mm per mm to 0.005 mm per mm, wherein the rate is defined as the decrease in radius in mm per length of the drill in mm in the axial direction.

In yet a further embodiment of the present disclosure the radius of the envelope surface in the third and each further tapering segment starting from the respective supporting radius decreases by a rate in a range from 0.00005 mm per mm to 0.005 mm per mm, wherein the rate is defined as the decrease, in radius in mm per length of the drill in mm in the axial direction.

In another embodiment the second tapering segment and optionally each further tapering segment towards the shaft comprises a first part and a second part, wherein the first part is located closer the cutting tip than the second part, and wherein in the first part the envelope surface forms a larger angle with the centre axis than in the second part. By this additional segmentation of the tapering segment the stability and accuracy of the drill may be maintained even when resharpening the drill. The first part may be ground to reduce the supporting radius after grinding of the cutting edges without influencing the second part of the tapering segment.

In an embodiment the angle formed between the envelope surface and the centre axis in the first part is identical to the angle formed between the envelope surface and the centre axis in the first tapering segment starting from the transition point.

In yet another embodiment the first tapering segment comprises a first part and a second part, wherein the first part starts from the transition point, and wherein in the first part the envelope surface forms a larger angle with the centre axis than in the second part.

In a further embodiment the angle formed between the envelope surface and the centre axis in at least a part of the second tapering segment is identical to the angle formed between the envelope surface and the centre axis in the first tapering segment starting from the transition point.

If the supporting radius in the beginning of a tapering segment is equal to the nominal radius there may be a tendency of the drill to get jammed in the whole. Thus, in an embodiment, the supporting radius at least in the beginning of the tapering segments is smaller than the nominal radius of the drill. However, the supporting radius shall only be minimally smaller than the nominal radius in order to still provide its supporting function. Thus, in an embodiment, the supporting radius is at maximum 1 % smaller than the nominal radius, preferably at maximum 0.5 % smaller than the nominal radius.

In the sense of the present disclosure, each tapering segment starts with the envelope surface having the supporting radius even if a section of the drill having the supporting radius has an axial extension of some length, i.e. the tapering segment forms a cylindrical part.

The deep hole drill according to the present disclosure has at least two tapering segments, i.e. a first tapering segment between the transition point and the first axial position and a second tapering segment from the first axial position and up to the second axial position.

However, in an embodiment the deep hole drill has at least three or exactly three tapering segments. Thus, in an embodiment the radius of the cutting section again increases at the second axial position up to a second supporting radius equal to or smaller than the nominal radius, wherein the radius of the cutting section decreases from the second supporting radius up to a third axial position distanced in the axial direction from the second axial position towards the shaft, whereby forming the third tapering segment of the cutting section. In an embodiment the deep hole drill according to the present disclosure has more than three tapering segments.

In an embodiment of the present disclosure, supporting radii at the beginning of each of the tapering segments are equal to each other. However, this does not exclude an embodiment, wherein at least some of the supporting radii at the beginning of the tapering segments are different from each other.

In a further embodiment the supporting radius at the beginning of each of the tapering segments decreases from the cutting tip towards the shaft. E.g. the second supporting radius at the second axial position is smaller than the first supporting radius at the first axial position, the third supporting radius at the third axial position is smaller than the second supporting radius at the second axial position and so on.

In an embodiment of the present disclosure, a length of each of the tapering segments of the cutting section is the nominal radius multiplied by a factor in a range from 0.5 to 20, preferably the nominal radius multiplied by a factor in a range from 1 to 10.

In a further embodiment of the present disclosure, the increase of the radius of the cutting section at least at one of the first or second or third axial positions forms a step. In a particular embodiment, the increase of the radius at all axial positions, forms a step. A step in the sense of the present disclosure is formed by the envelope surface at the first, second and third axial position having a surface normal forming an angle with the centre axis of the cutting section equal to 10° or smaller. In an embodiment the surface normal of the envelope surface at the first and/or second and/or third axial position is parallel to the centre axis of the cutting section.

In a further embodiment of the present disclosure, the radius of the cutting section after an increase to the supporting radius is constant over an axial extension in a range from 0.01 mm to 10 mm, preferably in a range from 0.5 mm to 5 mm. In this embodiment the envelope surface in the beginning of the respective tapering segment is cylindrical. A cylindrical envelope surface of the deep hole drill according to the present disclosure forms a supporting rib on the lands of the cutting section. In an embodiment the supporting ribs extend in a circumferential direction on each of the lands.

According to a further embodiment of the present disclosure, an axial length of each of the tapering segment decreases from the transition point towards the shaft. In an embodiment having at least two tapering segments, an axial distance between the transition point and the first axial position is larger than an axial distance between the first axial position and the second axial position.

### BRIEF DECSRIPTION OF THE FIGURES

Further advantages, features and applications of the present disclosure will become apparent from the following description of embodiments and the corresponding figures attached. The foregoing as well as the following detailed description of the embodiments will be better understood when read in conjunction with the appended drawings. It should be understood that the embodiments depicted are not limited to the precise arrangement and instrumentalities shown.
- Figure 1: is a broken away schematic side view of the envelope surface of a deep hole drill according to a first implementation of the present disclosure.
- Figure 2: is a broken away side view of the deep hole drill according to Figure 1.
- Figure 3: is a schematic comparative side view of the envelope surfaces of a prior art deep hole drill (left hand side) and a deep hole drill according to a second implementation of the present disclosure.
- Figure 4: is a broken away schematic side view of the envelope surface of a deep hole drill according to yet another implementation of the present disclosure.
- Figure 5: is a broken away schematic side view of the envelope surface of the deep hole drill of figure 1 with a magnification of the envelope surface at a first axial position.
- Figure 6: is a broken away schematic side view of the envelope surface of another embodiment of the present disclosure with a magnification of the envelope surface at a first axial position.
- Figure 7: is a broken away schematic side view of the envelope surface of a deep hole drill according to a further implementation of the present disclosure.

In the figures, identical elements have been denoted by identical reference numbers.

### DETAILED DESCRIPTION

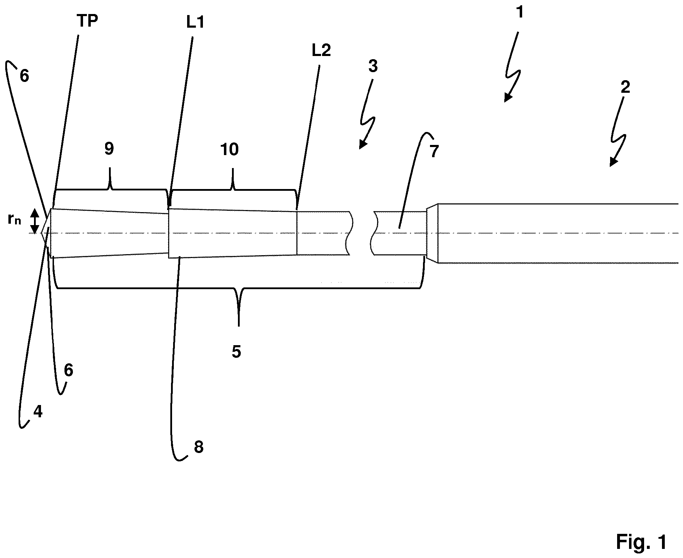

Figures 1 as well as Figures 3 to 8 are schematic side views of the envelope surfaces of deep hole drills 1, 1', 1", 1"', 1"" according to implementations of the present disclosure. Deep hole drills 1, 1', 1", 1"', 1"" comprise a shaft 2 providing a mounting section in order to mount the drill 1, 1', 1", 1"', 1"" in a chuck of a drilling machine.

Furthermore, the drill 1, 1', 1", 1'", 1"" has a cutting section 3, 3', 3", 3"', 3"" which during a drilling operation is involved in the cutting process by forming and transporting chips. The cutting section 3, 3', 3", 3"', 3"" consists of a cutting tip 4 and transportation section 5, 5', 5", 5"'.

The cutting tip 4 in the implementations depicted has two front cutting edges 6 providing a chip removing machining when the drill 1, 1', 1", 1"', 1"" is rotated around its centre axis 7 and fed in the axial direction parallel to the centre axis 7. Each of the two cutting edges 6 has a radial extension defining the nominal radius rₙ of the drill 1, 1', 1", 1'", 1"". The radial extension of the cutting edge 6 is measured in a direction perpendicular to the centre axis 7 from the centre axis 7 to a transition point TP on the outer periphery of the cutting section 3. In figure 1, the nominal radius of the drill is denoted by rₙ.

The cutting section 3, 3', 3", 3"', 3"" in its transportation section 5, 5', 5", 5'" comprises two helically extending chip flutes which are separated by two also helically extending lands. As the chip flutes are counter sunk into the surface of the cutting section 3, 3', 3", 3"', 3"" the envelope surface 8 visible in figures 1 and 3 to 8 is defined by the outer surface of the lands when the drill 1, 1', 1", 1"'. 1"" is rotated around its centre axis 7.

Assuming that the transportation segment would have an essentially cylindrical envelope surface having a radius equal to the nominal radius rₙ, the drill is likely to get jammed once the hole has reached a certain depth. In order to avoid a jamming of the drill 1 , 1', 1", 1"', 1"", the cutting section 3, 3', 3", 3"', 3"" has a first tapering segment 9, 9', 9", 9"', 9"" and at least a second tapering segment 10, 10', 10", 10"', 10"". In each of the tapering segments the envelope surface of the drill 1, 1', 1", 1'", 1"" tapers towards the shaft 2. By this tapering of the envelope surface 8 of the drill 1, 1', 1", 1"' 1"" the surface of the drill along most of the cutting section 3, 3', 3", 3"', 3"" is well distanced from the wall of the hole. This reduces the friction experienced by the drill 1, 1', 1", 1'", 1"" and thus the required momentum during drilling operation. However, due to the space introduced by the tapering segments between the envelope surfaces of the drill 1, 1', 1", 1"', 1"" and the wall of the drill hole, the drill 1, 1', 1", 1"', 1"" loses support on the drill hole and thus tends to walk off during the drilling operation.

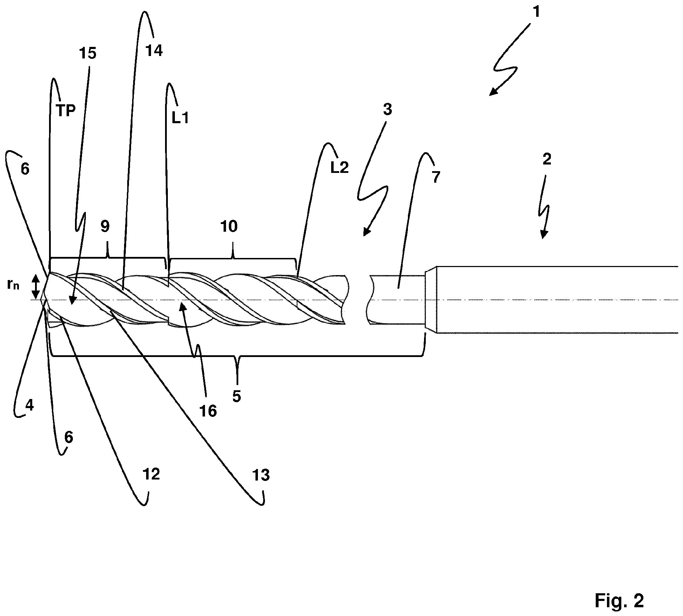

While figure 1 is a schematic side view of the envelope surface 8 of the deep hole drill 1, figure 2 is a side view of the same drill 1 depicting the lands 12, 13, 14 as well as the chip flutes 15, 16 between the lands 12, 13, 14 of the drill 1.

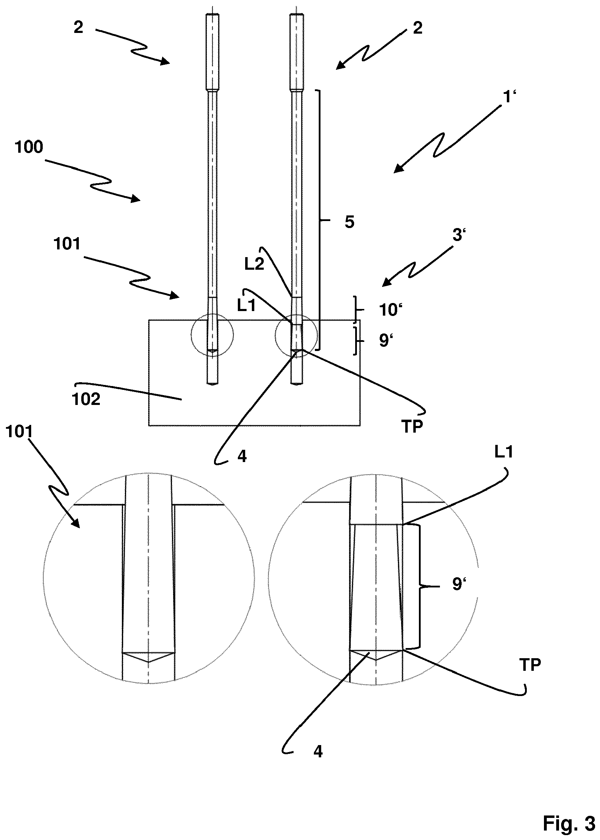

On the left hand side of figure 3, as well as in the inset on the left hand side of figure 3, a deep hole drill 100 according to the prior art is shown, wherein the cutting section 101 has a single tapered segment which runs out into a cylindrical segment of constant radius. From the figure, the distance between the envelope surface of this drill 100 and the wall of the hole in the workpiece 102 is clearly visible.

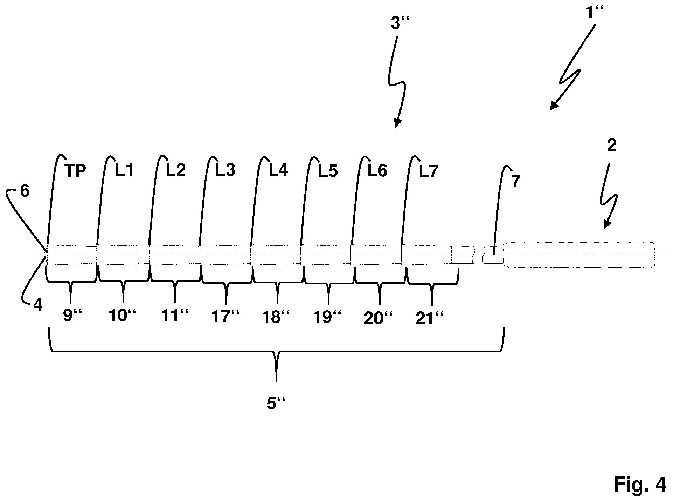

In order to avoid the tendency of the drill 1 to walk off from the intended drilling direction, the cutting section 3 of the deep hole drill 1 of figure 1 but also of all other implementations of the present disclosure as depicted on the right hand side of figure 3, the inset on the right hand side of figure 3 as well as in figures 4 to 8 has an increasing radius of the cutting section 3, 3,', 3", 3"', 3"" at a first axial position L1 distanced from the transition point TP in the axial direction towards the shaft 2. The first tapering segment 9, 9', 9", 9"', 9"" of the cutting section 3, 3', 3", 3"', 3"" tapers up to the first axial position L1, wherein in the implementations according to figures 1 to 8 the radius of the cutting section defined by the envelope surface increases in form of a step to a radius denoted as the supporting radius in the sense of the present application.

In all examples of the drill 1, 1', 1", 1"', 1"" according to the present disclosure, the supporting radius at the first axial position L1 the supporting radius is by 0.3% smaller than the nominal radius rₙ.

In the second tapering segment 10, 10', 10", 10"', the radius of the envelope surface 8 tapers again towards the shaft 2 until it reaches an axial position L2.

From the right hand side of figure 3, the effect of the supporting radius at the first axial position L1 becomes evident. During drilling operation, the drill 1' is supported by the envelope surface having the supporting radius at the first axial position L1 providing a radial support of the drill 1' in the hole reducing any walk off of the drill as well as scattering motions of the drill.

Both drills 1, 1' of figures 1 and 2 on the one hand and of figure 3 on the other hand the length in the axial direction of the first tapering segment 9, 9' is identical to the second tapering segment 10, 10'.

Still, both implementations of figures 1 and 2 show a drill 1, 1' having two tapering segments 9, 10, 9', 10'.

Figure 4 shows an alternative implementation of a deep hole drill 1", wherein the cutting section 3" has eight tapering segments 9", 10", 11", 17", 18", 19", 20", 21". In the implementation shown the length of the tapering segments 9", 10", 11", 17", 18", 19", 20", 21" is constant in the axial direction of the drill 1".

Providing a plurality of tapering segments 9", 10", 11", 17", 18", 19", 20", 21" enhances support of the cutting section 3" at the walls of the hole. Like at the axial position L1 on the drill 1 according to figure 1 the radius of the envelope surfaces of the deep hole drill 1" of figure 4 increases stepwise at the axial positions L1, L2, L3, L4, L5, L6, L7 up to the supporting radius. In the implementation of figure 4 the supporting radii at the axial positions L1 to L7 decrease from the axial position L1 to the axial position L7, wherein the supporting radius at the first axial position L1 is by 0.3% smaller than the nominal radius rₙ at the transition point TP.

By providing the cutting section 3" with seven supports along the axial direction the drill 1" of figure 4 can be designed even longer than the drill according to the implementation of figure 1.

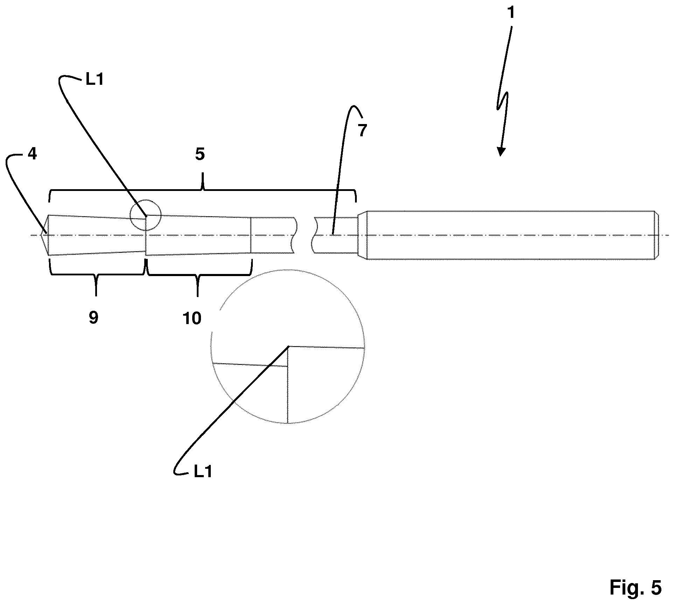

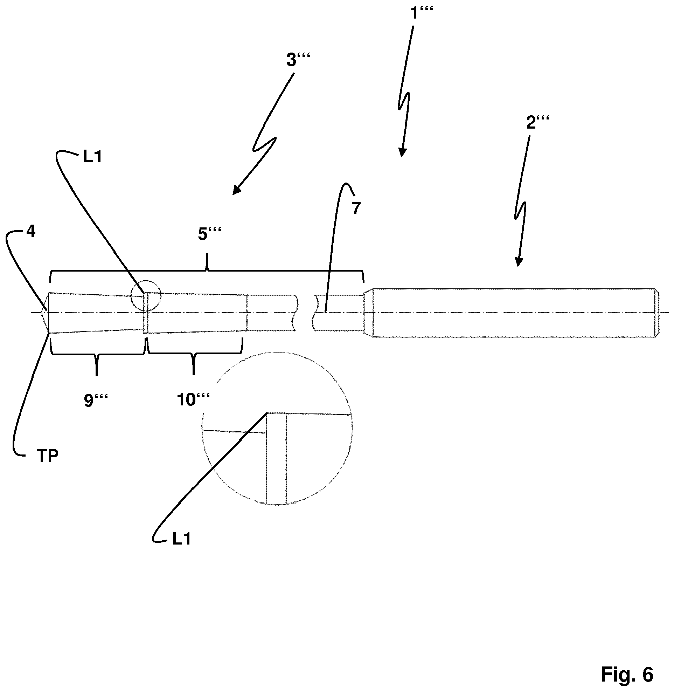

Figures 5 and 6 are schematic side views of the envelope surfaces of the cutting sections 3, 3"' of drills 1, 1'" according to the present disclosure, which have been depicted in order to show how the increase up to the supporting radius at the axial positions, in particular at the first axial position L1 may look like. Figure 5 is a schematic representation of the drill 1 of figure 1. Figure 6 shows an alternative thereof, wherein when compared to the drill 1 of figure 5 only the transition at the axial position L1 has been changed.

Most relevant for the considerations regarding figures 5 and 6 are the insets in the figures showing enlarged views of the envelope surface around the first axial position L1. When considering the implementation of figure 5 the radius at the position L1 increases stepwise from the minimum radius of the first tapering segment 9 to the supporting radius at the beginning of the second tapering segment 10. The tapering of the second tapering segment 10 starts immediately at the first axial position L1 such that the tapering is continuous and linear from the first axial position L1.

In contrast figure 6 shows an alternative implementation, wherein the radius of the envelope surface at the position L1 increases stepwise. Over the first 1.5 mm of the second tapering segment 10'" the radius of the envelope surface is constant such that the envelope surface in the beginning of the second tapering segment 10'" is a cylindrical surface which is then followed by linearly decreasing radius down to the minimum radius of the second tapering segment 10"'.

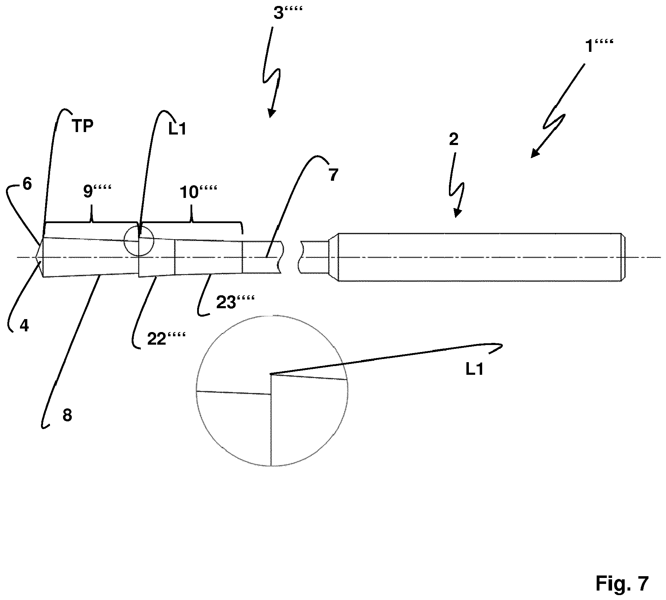

The alternative implementation of the deep hole drill 1"" depicted in figure 7 has two tapering segments 9"", 10"" as has the implementation according to figures 1 and 2. However, the second tapering segment 10"" comprises two linearly tapering parts, namely a first part 22"" and a second part 23"". These two tapering parts 22"", 23"" of the second tapering segment 10"" form two different angles with respect to the centre axis 7. The angle between the envelope surface of the first part 22"" starting from the first axial position L1 and the centre axis 7 is larger than the angle formed between the envelope surface of the second part 23"" and the centre axis 7. Furthermore, the angle between the envelope surface 8 of the first part 22"" and the centre axis 7 is identical to the angle between the linearly tapering envelope surface 8 of the first tapering segment 9"" and the centre axis 7.

By this implementation the resharpening of the cutting edges 6 can be effected by the same tool as the regrinding of the supporting radius at the first axial position L1. Simultaneously a high stability of the drill 1"" is maintained by providing a small tapering angle of the second part of the second tapering segment.

When the cutting edges 6 of the drill 1"" are resharpened the nominal radius rₙ at the transition point TP is reduced by the grinding operation. As the design rules for a deep hole drill according to this implementation require that the supporting radius at the first axial position L1 is at least equal to or slightly smaller than the nominal radius rₙ a re-sharpening of the cutting edges 6 will require a precise re-grinding of the second tapering segment 10"". However, grinding the second tapering segment 10"" leads to a loss of material and thus a loss of stability of the overall drill. By grinding only the first part 22"" of the second tapering segment 10"" having a different slope with respect to the centre axis 7 when compared to the second part 23"" the grinding of the second tapering segment 10"" at the first axial position L1 leads to a minimized loss of material in the second tapering segment 10"". Furthermore, by providing the second part with a smaller tapering angle the stability of the drill 1"" is enhanced, while being able to regrind the first part 22"" with the same tool as the first tapering segment 9"".

For the purposes of original disclosure, it is noted that all features become apparent for a person skilled in the art from the present description, the figures and the claims even if they have only been described with reference to particular further features and can be combined either on their own or in arbitrary combinations with other features or groups of features disclosed herein as far as such combinations are not explicitly excluded or technical facts exclude such combinations or make them useless. An extensive, explicit description of each possible combination of features has only been omitted in order to provide a short and readable description.

While the disclosure has been shown in detail in the figures and the above description, this description is only an example and is not considered to restrict the scope of protection as it is defined by the claims. The disclosure is not restricted to the disclosed embodiments.

Modifications to the disclosed embodiments are apparent for a person skilled in the art from the drawings, the description and the attached claims. In the claims, the word "comprising" does not exclude other elements or steps and the undefined article "a" does not exclude a plurality. The mere fact that some features have been claimed in different claims does not exclude their combination. Reference numbers in the claims are not considered to restrict the scope of protection.

### Reference numerals

- 1, 1', 1", 1"', 1"": drill, deep hole drill
- 2: shaft
- 3, 3', 3", 3"', 3"": cutting section
- 4: cutting tip
- 5, 5', 5", 5'": transportation section
- 6: front cutting edge
- 7: centre axis
- 8: envelope surface
- 9, 9', 9", 9"', 9"": first tapering segment
- 10, 10', 10", 10"', 10"": second tapering segment
- 11": third tapering segment
- 12, 13, 14: land
- 15, 16: chip flute
- 17" to 21": fourth to eighth tapering segment
- 22"": first part of the second tapering segment 10""
- 23"": second part of the second tapering segment 10""

- 100: deep hole drill
- 101: cutting section
- 102: workpiece

- rₙ: nominal radius

- TP: transition point

- L1: first axial position
- L2: second axial position
- L3 to L7: third to seventh axial position

## Claims

1. A deep hole drill (1, 1', 1", 1'", 1"") comprising
a shaft (2) having a mounting section, and
a cutting section (3, 3', 3", 3"', 3"") consisting of a cutting tip (4) with at least one front cutting edge (6) and a plurality of helically extending chip flutes being separated from each other by helically extending lands,
wherein a radial extension of the at least one front cutting edge (6) from a centre axis (7) of the cutting section (3, 3', 3", 3"', 3"") to a transition point (TP) on an outer periphery of the cutting section (3, 3', 3", 3"', 3"") defines a nominal radius (rₙ) of the deep hole drill (1, 1', 1", 1"', 1""),
wherein an extension of the cutting section (3, 3', 3", 3"', 3"") in an axial direction is by a factor of twenty or more larger than the nominal radius (rₙ) of the deep hole drill (1, 1', 1", 1"', 1""),
wherein a radius of the cutting section (3, 3', 3", 3"', 3"") defined by a distance of an envelope surface (8) of the cutting section (3, 3', 3", 3"', 3"") from the centre axis (7) of the deep hole drill (1, 1', 1", 1'", 1"") decreases from the nominal radius (rₙ) up to a first axial position (L1) distanced in the axial direction from the transition point (TP) towards the shaft (2), whereby forming a first tapering segment (9, 9', 9", 9"') of the cutting section (3, 3', 3", 3"', 3""), and
wherein the radius of the cutting section (3, 3', 3", 3"', 3"") again increases at the first axial position (L1) up to a first supporting radius equal to or smaller than the nominal radius (rₙ),
**characterised in that**
the radius of the cutting section (3, 3', 3", 3"', 3"") decreases from the supporting radius up to a second axial position (L2) distanced in the axial direction from the first axial position (L1) towards the shaft (2), whereby forming a second tapering segment (10, 10', 10", 10"') of the cutting section (3, 3', 3", 3"', 3"").

2. The deep hole drill (1, 1', 1", 1"', 1"") according to the previous claim, wherein the radius of the cutting section (3, 3', 3", 3"', 3"") again increases at the second axial position (L2) up to a second supporting radius equal to or smaller than the nominal radius (rₙ), and wherein the radius of the cutting section (3, 3', 3", 3"', 3"") decreases from the second supporting radius up to a third axial position (L3) distanced in the axial direction from the second axial position (L2) towards the shaft (2), whereby forming a third tapering segment (11") of the cutting section (3, 3', 3", 3"', 3"").

3. The deep hole drill (1, 1', 1", 1'", 1"") according to anyone of the previous claims, wherein a length of each of the tapering segments of the cutting section (3, 3', 3", 3"', 3"") is equal to the nominal radius multiplied by a factor in a range from 0.5 to 20.

4. The deep hole drill (1, 1', 1", 1"', 1"") according to anyone of the previous claims, wherein the supporting radius in the beginning of each tapering segment of the cutting section (3, 3', 3", 3"', 3"") is at maximum 1 % smaller than the nominal radius (rₙ).

5. The deep hole drill (1, 1', 1", 1"', 1"") according to anyone of the previous claims, wherein the supporting radius in the beginning of each tapering segment of the cutting section (3, 3', 3", 3"', 3"") decreases in a direction towards the shaft (2).

6. The deep hole drill (1, 1', 1", 1'", 1"") according to anyone of the previous claims, wherein the increase of the radius of the cutting section (3, 3', 3", 3"', 3"") at least at one of the first, second or third axial positions forms a step.

7. The deep hole drill (1, 1', 1", 1'", 1"") according to anyone of the previous claims, wherein the radius of the cutting section (3, 3', 3", 3"', 3"") after an increase to the supporting radius is constant for an axial extension in a range from 0.01 mm to 10 mm defining supporting ribs on the lands

8. The deep hole drill (1, 1', 1", 1"', 1"") according to anyone of the previous claims, wherein an axial distance between the transition point (TP) and the first axial position (L1) is larger than an axial distance between the first axial position (L1) and the second axial position (L2).

9. The deep hole drill (1, 1', 1", 1"', 1"") according to anyone of the previous claims, wherein an axial length of each tapering segment decreases from the transition point (TP) towards the shaft (2).

10. The deep hole drill (1, 1', 1", 1'", 1"") according to anyone of the previous claims, wherein at least the second tapering segment (10"") comprises a first part (22"") and a second part (23""), wherein the first part (22"") is located closer the cutting tip (4) than the second part (23""), and wherein in the first part (22"") the envelope surface (8) forms a larger angle with the centre axis (7) than in the second part (23"").

11. The deep hole drill (1, 1', 1", 1'", 1"") according to the previous claim, wherein the angle formed between the envelope surface (8) and the centre axis (7) in the first part (22"") is identical to the angle formed between the envelope surface (8) and the centre axis (7) in the first tapering segment (9"") starting from the transition point (TP).

12. The deep hole drill (1, 1', 1", 1'", 1"") according to anyone of the previous claims, wherein the angle formed between the envelope surface (8) and the centre axis (7) in at least a part (22"") of the second tapering segment (10"") is identical to the angle formed between the envelope surface (8) and the centre axis (7) in the first tapering segment (9"") starting from the transition point (TP).
